# EUROPÄISCHE PATENTSCHRIFT

(11) **EP 3 526 372 B1**
(45) Veröffentlichungstag und Bekanntmachung des Hinweises auf die Patenterteilung: **17.05.2023**
(21) Anmeldenummer: 17816463.8
(22) Anmeldetag: 20.11.2017
(51) Int. Cl.: C25B 1/04, C25B 1/23, C25B 9/17, C25B 9/75, C25B 11/032, C25B 11/036, C25B 15/08

(54) **ELEKTROLYSEZELLE MIT EINER GASDIFFUSIONSELEKTRODE UND VERFAHREN ZU DEREN BETRIEB**
ELECTROLYSIS CELL WITH A GAS DIFFUSION ELECTRODE, AND METHOD FOR OPERATING SAME
CELLULE ÉLECTROLYTIQUE AYANT UNE ÉLECTRODE À DIFFUSION GAZEUSE ET SON PROCÉDÉ DE FONCTIONNEMENT

(30) Priorität: 08.12.2016 DE 102016224466
(43) Veröffentlichungstag der Anmeldung: 21.08.2019
(73) Patentinhaber: Siemens Energy Global GmbH & Co. KG, 81739 München (DE)
(72) Erfinder: DU, Van An, 22089 Hamburg (DE); JEANTY, Philippe, 80802 München (DE); MAGORI, Erhard, 85622 Feldkirchen (DE); TAWIL, Angelika, 80935 München (DE); WIESNER-FLEISCHER, Kerstin, 85635 Höhenkirchen-Siegertsbrunn (DE); VON SICARD, Oliver, 81541 München (DE)
(86) Internationale Anmeldenummer: PCT/EP2017/079761
(87) Internationale Veröffentlichungsnummer: WO 2018/104038

(56) Entgegenhaltungen:
- EP-A1- 0 150 017
- EP-A1- 2 730 638
- WO-A1-2015/013764
- DE-A1- 19 954 247
- DE-A1-102011 007 759

## Beschreibung

Die Erfindung betrifft eine Elektrolysezelle, aufweisend ein Gehäuse mit einer Anode und einer als Kathode geschalteten Gasdiffusionselektrode (im Folgenden auch kurz GDE genannt). Beide Elektroden sind in einem durch das Gehäuse gebildeten Elektrolytraum mit einem Elektrolyt beaufschlagbar. Die GDE fungiert dabei als Trennwand zwischen dem Elektrolytraum und einem in dem Gehäuse vorgesehenen Gasraum für ein Reaktionsgas. Dabei grenzt die GDE mit einer Elektrolytseite an den Elektrolytraum und mit einer Gasseite an den Gasraum, trennt also diese beiden Räume. Die Erfindung betrifft auch eine Elektrodenplatte, die in der genannten Elektrolysezelle einsetzbar ist.

Weiterhin betrifft die Erfindung ein Verfahren zum Betrieb einer solchen Elektrolysezelle der eingangs angegebenen Art. Bei diesem Verfahren wird die Elektrolytseite der GDE mit einem Elektrolyt beaufschlagt und die Gasseite der GDE mit einem Reaktionsgas.

Elektrolysezellen mit Elektrodenplatten der eingangs angegebenen Art und Verfahren zu deren Betrieb sind allgemein bekannt. Gasdiffusionselektroden werden beispielsweise in Brennstoffzellen zur Gewinnung von Energie aus Wasserstoff und Sauerstoff verwendet. Eine andere Verwendung von GDE findet in elektrochemischen Zellen zur Umsetzung von Reaktionsgasen statt. In derartigen elektrochemischen Zellen wird ein Eduktgas (Reaktionsgas) zugeführt und ein Produktgas, welches auch ein Gasgemisch sein kann, abgeführt. Die GDE bildet dabei die Kathode, welche gasdurchlässig ausgeführt ist (mikroporöser Aufbau). Der Elektrolytraum zwischen Anode und Kathode ist mit einem Elektrolyt gefüllt und kann außerdem eine Trennmembran beispielsweise aus Nafion^{®} aufweisen. In diesem Fall wird der Elektrolyt den beiden Teilräumen getrennt zugeführt.

Die GDE ermöglicht die Diffusion des Reaktionsgases, welches an der Kathode auf diesem Wege bereitgestellt werden kann. Damit das Gas in die Kathode eindringen kann, wird der Konzentrationsgradient ausgenutzt, der sich durch die laufende Umsetzung des Gases im Inneren der GDE einstellt. Eine weitere Möglichkeit besteht in einer Erhöhung des Gasdrucks auf der Gasseite der GDE, wodurch der Umsatz an Gas in der GDE steigt.

Das Reaktionsgas wird in der GDE umgesetzt. Dabei kann ein Produktgas entstehen, welches in Abhängigkeit des auf der Gasseite herrschenden Drucks die GDE durchdringt und mit dem Elektrolyten aus dem Elektrolytraum transportiert werden kann, oder es tritt in den Gasraum aus und wird dort abtransportiert. Im letzteren Fall ist im Gasraum ein kontinuierlicher Gasfluss notwendig, wobei Reaktionsgas zugeführt und ein Gemisch aus Reaktionsgas und Produktgas abgeführt wird.

Ein Betrieb der oben angegebenen Elektrolysezellen besteht somit aus der Zuführung des Reaktionsgases als Edukt, der Einbringung in die GDE und der anschließenden Ableitung des Reaktionsgases oder eines entstandenen Produktgases. Die Möglichkeiten, diesen Prozess durch die Diffusionsvorgänge in der GDE und durch an der GDE anliegende Druckunterschiede zwischen Gasseite und Elektrolytseite zu beeinflussen, sind begrenzt. Durch den Druckunterschied lässt sich Gas durch die poröse GDE pressen. Allerdings müssen hierbei auch ungewünschte Effekte hingenommen werden. Je nach Druckgefälle kann auf der Elektrolytseite auch Reaktionsgas aus der GDE austreten. Umgekehrt kann das Elektrolyt auf der Gasseite der GDE austreten. Da es sich hierbei gewöhnlich um eine Salzlösung handelt, besteht dann die Gefahr, dass auf der Gasseite der GDE Salze auskristallisieren. Außerdem muss die austretende Flüssigkeit aus dem Gasraum entfernt werden und befeuchtet eventuell das Reaktionsgas.

DE19954247 beschreibt eine Elektrolysezelle mit mindestens einer Gasdiffusionselektrode. Der der Gasdiffusionselektrode benachbarte Gasraum besteht aus mehreren, übereinanderliegenden und durch Reduzierstücke miteinander verbundenen Gaskanälen, die vom Gasstrom nacheinander mäanderförmig von unten nach oben durchlaufen werden. EP2730638 beschreibt ein Gas-zu-Flüssigkeit-Reaktor, wobei eine Bipolarplatte die einzelnen Zellen voneinander trennt und so konfiguriert ist, dass sie Strömungskanäle bereitstellt. DE102011007759 beschreibt eine Elektrolysezelle mit einem Blechpaket übereinander gestapelter Bleche mit Ausnehmungen zwischen zwei Bipolarplatten. Die Bleche sind derart übereinander angeordnet, dass sich Ausnehmungen benachbarter Bleche teilweise, aber nicht vollständig überlappen, wodurch in Richtung der Blechebene durchgehende Kanäle ausgebildet sind.

Die Aufgabe der Erfindung liegt darin, eine Elektrolysezelle mit einer Gasdiffusionselektrode, eine in dieser Elektrolysezelle verwendbare Elektrodenplatte und ein Verfahren zu deren Betrieb anzugeben, mit der oder mit dem der Gasdurchsatz an Reaktionsgas in der GDE möglichst flexibel eingestellt werden kann und dabei ein ungewünschter Durchsatz an Elektrolyt und/oder Reaktionsgas durch die GDE möglichst weitgehend vermieden wird.

Diese Aufgabe wird mit der eingangs angegebenen Elektrolysezelle erfindungsgemäß dadurch gelöst, dass die Gasdiffusionselektrode (GDE) mit der Gasseite an eine Kontaktseite eines Stützkörpers grenzt, wobei der Gasraum durch ein erstes Kanalsystems und durch ein zweites Kanalsystem gebildet wird. Dabei verlaufen das erste Kanalsystem und das zweite Kanalsystem getrennt voneinander, d.h. dass das Reaktionsgas nicht direkt zwischen dem ersten Kanalsystem und dem zweiten Kanalsystem wechseln kann. Vielmehr weisen das erste Kanalsystem und das zweite Kanalsystem jeweils Öffnungen in der Kontaktseite auf, welche direkt an die Gasseite der GDE angrenzen. Dadurch wird vorteilhaft erreicht, dass das Reaktionsgas durch die GDE fließt, um zwischen dem ersten Kanalsystem und dem zweiten Kanalsystem zu wechseln. Hierdurch wird ein Fluss des Reaktionsgases durch die GDE erzwungen, wobei dieser lateral entlang der Gasseite der GDE verläuft. Damit entstehen zusätzliche Möglichkeiten, den Gasfluss in der GDE zu steuern. Dadurch, dass das erste Kanalsystem und das zweite Kanalsystem getrennt voneinander sind, ist es nämlich möglich, in beiden Kanalsystemen einen unterschiedlichen Druck einzustellen. Hierdurch entsteht ein steuerbares Druckgefälle, welches den Fluss des Reaktionsgases in der GDE direkt beeinflusst. Dabei führt eine Erhöhung des Druckunterschieds vorrangig zu einer Erhöhung des Reaktionsgasflusses lateral zur Gasseite der GDE und nur indirekt zu einer Erhöhung des Flusses des Reaktionsgases orthogonal zur Gasseite. Daher ist es leichter, auch bei hohen Druckunterschieden zwischen dem ersten Kanalsystem und dem zweiten Kanalsystem einen Durchgang des Reaktionsgases bis zum Elektrolytraum zu vermeiden oder zumindest zu vermindern. Der Druckunterschied kann auch während des Betriebs der Elektrolysezelle verändert werden.

Andererseits kann unabhängig vom zwischen dem ersten Kanalsystem und dem zweiten Kanalsystem vorliegenden Druckgefälle das Druckgefälle zwischen Gasseite und Elektrolytseite der GDE eingestellt werden, um die orthogonale Komponente des Flusses des Reaktionsgases einerseits und den zur Elektrolytseite orthogonalen Fluss des Elektrolyts in Richtung des Gasraums zu beeinflussen. Vorteilhaft kann ein Durchtritt von Elektrolyt an der GDE damit verhindert oder zumindest vermindert werden, ohne die Durchflussrate des Reaktionsgases wesentlich zu beeinflussen. Selbstverständlich können auch weite Einflussfaktoren variiert werden. Die Dicke der GDE, der Schichtaufbau und ihre Porosität können zum Beispiel ebenfalls verändert werden, um die Strömungsverhältnisse in der GDE zu beeinflussen.

Der Stützkörper trägt überdies vorteilhaft zur mechanischen und elektrischen Kontaktierung der GDE bei. Dies ermöglicht vorteilhaft die Herstellung großflächiger GDE, weil diese über den Stützkörper sowohl zuverlässig elektrisch kontaktiert werden können als auch mechanisch stabilisiert werden können. Die mechanische Stabilisierung ermöglicht wiederum größere Druckgefälle zwischen Gasseite und Elektrolytseite der GDE, was wiederum den Spielraum bei der Einstellung der Verfahrensparameter vorteilhaft vergrößert.

Das Reaktionsgas kann von dem ersten Kanalsystem über die Öffnungen in die GDE und aus der GDE über die Öffnungen in das zweite Kanalsystem geleitet werden. Es ist jedoch auch die umgekehrte Richtung denkbar. Gemäß dem oben angegebenen Verfahren ist es erfindungsgemäß überdies auch möglich, dass die Flussrichtung des Reaktionsgases im ersten Kanalsystem, an der Gasseite und im zweiten Kanalsystem während der Elektrolyse mindestens einmal umgekehrt wird. Somit können das erste Kanalsystem und das zweite Kanalsystem jeweils sowohl zur Zuführung des Reaktionsgases sowie zur Abführung des Reaktionsgases und eines eventuell entstanden Produktgases verwendet werden. Eine Umkehrung der Flussrichtung während der Elektrolyse hat den Vorteil, dass Performanceverluste der GDE ausgeglichen werden können, die durch Einstellung eines stationären Zustands in der GDE zustande kommen können.

Die Einstellung der jeweiligen Druckgefälle zwischen dem ersten Kanalsystem und dem zweiten Kanalsystem und zwischen der Elektrolytseite und der Gasseite der GDE kann auch dazu genutzt werden, den Weg eines Produktgases, welches in der GDE entsteht, zu steuern. Dadurch, dass das Produktgas andere Eigenschaften aufweist als das Reaktionsgas (welches als Eduktgas eingespeist wird) ist es möglich, dass das Produktgas die GDE durchtritt und über den Elektrolytraum die Elektrolysezelle verlässt oder dass das Produktgas weitgehend über das erste Kanalsystem oder das zweite Kanalsystem abgeführt wird. Auch dieser Vorgang kann durch Einstellung der Druckverhältnisse zwischen dem ersten Kanalsystem und dem zweiten Kanalsystem sowie zwischen Elektrolytseite und Gasseite der GDE direkt beeinflusst werden.

Die Gasdiffusionselektrode ist mit einer Gasseite an einer Kontaktseite eines plattenförmigen Stützkörpers befestigt, wobei ein an die Gasseite angrenzender Gasraum durch ein erstes Kanalsystem und durch ein zweites Kanalsystem ausgebildet ist. Das erste Kanalsystem und das zweite Kanalsystem verlaufen, wie bereits beschrieben, getrennt voneinander. Außerdem weisen das erste Kanalsystem und das zweite Kanalsystem jeweils Öffnungen in der Kontaktseite auf, an die die GDE angrenzt. Eine solche Elektrodenplatte dient zum Einbau in die oben erläuterte Elektrolysezelle, wodurch die bereits beschriebenen Vorteile erreicht werden.

Eine der Kontaktseite gegenüber liegende Seite des Stützkörpers ist elektrisch leitend und in elektri scher Verbindung mit der Kontaktseite steht. Hierdurch kann die Elektrodenplatte als bipolare Platte verwendet werden, wodurch vorteilhaft ein besonders einfacher Aufbau der Elektrolysezelle in Stapelbauweise ermöglicht wird. Dabei werden Elektrolyträume im Wechsel mit dem durch das erste Kanalsystem und das zweite Kanalsystem gebildeten Gasräumen angeordnet, wobei der Gasraum in die Elektrodenplatte integriert ist. Zwischen den Elektrodenplatten befinden sich insofern die Elektrodenräume, vorzugsweise durch eine Trennmembran in einen Anodenraum und einen Kathodenraum getrennt. Die Elektrodenplatte dient jeweils mit der an ihrer einen Seite angeschlossenen GDE als Kathode und in einem benachbarten Elektrolytraum mit ihrer gegenüber liegenden Seite als Anode. Die Kontaktseite des Stützkörpers dient gleichzeitig zur elektrischen Kontaktierung der GDE.

Eine andere Möglichkeit liegt darin, dass beide Seiten des Stützkörpers als Kontaktseiten für je eine GDE ausgeführt sind. Dies bedeutet, dass auch das erste Kanalsystem und das zweite Kanalsystem Öffnungen in beiden Kontaktseiten aufweisen müssen. Auf diesem Wege kann die Elektrodenplatte vorteilhaft dazu dienen, für zwei benachbarte Elektrodenräume je eine GDE als Kathode zur Verfügung zu stellen.

Die Elektrodenplatte kann gemäß weiteren Ausgestaltungen der erfindungsgemäßen Elektrodenplatte, wie oben erläutert, ausgestaltet sein, wobei die bereits erläuterten Vorteile dabei erreicht werden. Insbesondere ist es möglich, dass das erste Kanalsystem erste Kanäle und das zweite Kanalsystem zweite Kanäle aufweist, wobei die ersten Kanäle und die zweiten Kanäle abwechselnd und parallel zueinander und parallel zur Kontaktseite verlaufend in dem Stützkörper angeordnet sind. Besonders vorteilhaft ist es, wenn das erste Kanalsystem und das zweite Kanalsystem kammartig ausgebildet sind und ineinander greifen. Möglich ist es vorteilhaft, dass die Öffnungen in der Kontaktseite durch die zur Kontaktseite hin offenen ersten Kanäle und die zur Kontaktseite hin offenen zweiten Kanäle ausgebildet sind. Alternativ ist es möglich, dass die Öffnungen in der Kontaktseite durch Löcher ausgebildet sind, die das erste Kanalsystem und das zweite Kanalsystem jeweils mit der Kontaktseite verbinden.

Gemäß einer vorteilhaften Ausgestaltung der erfindungsgemäßen Elektrolysezelle ist vorgesehen, dass der Elektrolytraum durch eine als ionendurchlässige Trennmembran oder als ionen- und flüssigkeitsdurchlässige, separat ausgeführte Trennwand in einen Anodenraum und einen Kathodenraum geteilt ist, wobei der Anodenraum einen Anolyteingang und einen Anolytausgang für einen Anolyten und der Kathodenraum einen Katholyteingang und einen Katholytausgang für einen Katholyten aufweist. Eine solche Ausführung des Elektrolytraums ist von Vorteil, wenn an der Anode und der Kathode (GDE) unterschiedliche Gase entstehen beziehungsweise durch die GDE treten, die sich im Elektrolytraum nicht vermischen sollen. Von besonderer Bedeutung ist die Trennwand, wenn im Elektrolytraum eine Elektrolyse von Wasser erfolgt und die entstehenden Gase Sauerstoff und Wasserstoff sich nicht zu einem Knallgasgemisch vermischen sollen.

Gemäß einer weiteren Ausgestaltung der Erfindung ist vorgesehen, dass das erste Kanalsystem erste Kanäle und das zweite Kanalsystem zweite Kanäle aufweist, wobei die ersten Kanäle und die zweiten Kanäle abwechselnd und parallel zueinander und parallel zur Kontaktseite verlaufend in dem Stützkörper angeordnet sind. Der parallele Verlauf zueinander bewirkt vorteilhaft, dass die Abstände zwischen den ersten Kanälen und den zweiten Kanälen jeweils konstant bleiben und nach dem Kriterium ausgelegt werden können, dass eine geforderte Wegstrecke des Gases in der GDE zurückgelegt wird. Dabei strömt das Reaktionsgas jeweils von den als Einlass verwendeten Kanälen zu den als Auslass verwendeten Kanälen. Eine parallele Ausrichtung der Kanäle zur Kontaktseite unterstützt vorteilhaft weiter die gleichmäßige Verteilung des Reaktionsgases über die gesamte GDE, deren Fläche über die Kontaktseite des Stützkörpers an diesem anliegt.

Der Stützkörper übernimmt vorteilhaft zusätzlich zur Aufgabe der Aufnahme der Kanäle und Verteilung des Reaktionsgases die Aufgabe der Abstützung der GDE. Diese kann daher vorteilhaft dünner ausgeführt werden beziehungsweise mit einer größeren Porosität und damit inneren Oberfläche zum Umsetzen des Reaktionsgases. Der Wirkungsgrad der GDE wird dabei vorteilhaft erhöht, während die mechanische Stabilität der GDE durch den Stützkörper gewährleistet ist. Dafür reichen die Bereiche der Kontaktseite, die nicht mit den Öffnungen versehen sind und somit direkt an der Gasseite der GDE anliegen.

Wenn der Stützkörper aus einem elektrisch leitfähigen Material ausgebildet ist, kann dieser gemäß einer weiteren vorteilhaften Ausgestaltung der Erfindung auch die elektrische Kontaktierung und nicht nur die mechanische Kontaktierung der GDE übernehmen. Insbesondere bei großflächigen GDE, die für den großtechnischen Einsatz konzipiert sind, lässt sich auf diesem Wege eine elektrische Kontaktierung der GDE mit einem geringen Übergangswiderstand erzeugen. Der Stützkörper eignet sich dabei insbesondere auch, um einen Stapelaufbau der Elektrolysezelle zu unterstützen (hierzu im Folgenden noch mehr).

Eine besondere Ausgestaltung der Kanalanordnung wird erhalten, wenn das erste Kanalsystem und das zweite Kanalsystem kammartig ausgebildet sind und ineinander greifen. Der Verlauf der Kanäle entspricht dabei den Zinken des Kamms, die jeweils über einen gemeinsamen Verteilerkanal versorgt werden. Die Abstände zwischen den jeweils benachbarten Kanälen der einen kammartigen Anordnung sind so groß, dass die jeweils benachbarten Kanäle der anderen kammartigen Anordnung in den Zwischenräumen Platz finden. Der Abstand der ersten Kanäle und zweiten Kanäle ist jeweils so groß, dass das Reaktionsgas in der benachbarten GDE eine genügende Wegstrecke zurücklegt. Der Vorteil einer kammartigen Ausbildung des Kanalsystems ist eine strömungsgünstige Ausgestaltung, bei der die einzelnen ersten Kanäle und zweiten Kanäle gleichmäßig mit dem Reaktionsgas beaufschlagt werden können. Dies kann durch einen sich verjüngenden Querschnitt hin zu den Enden der jeweiligen ersten Kanäle und zweiten Kanäle zusätzlich unterstützt werden.

Eine weitere Ausgestaltung der Erfindung sieht vor, dass die Öffnungen in der Kontaktseite durch die zur Kontaktseite hin offenen ersten und die zur Kontaktseite hin offenen zweiten Kanäle gebildet werden. Mit anderen Worten sind die Kanäle in der Kontaktseite als Nuten oder Gräben ausgeführt, so dass mit anderen Worten die fehlende Wand der Kanäle die Öffnung in der Kontaktseite ausbildet. Dies hat den Vorteil, dass die Öffnung eine genügend große Querschnittsfläche aufweist, damit das Reaktionsgas zwischen den jeweiligen Kanälen und der GDE mit einem geringen Strömungswiderstand wechseln kann. Die verbleibende Kontaktseite zwischen den Kanälen dient bei dieser Ausführung zum Stützen der GDE durch den Stützkörper.

Eine wieder andere Ausgestaltung der Erfindung sieht vor, dass die Öffnungen in der Kontaktseite durch Löcher gebildet werden, die das erste Kanalsystem und das zweite Kanalsystem jeweils mit der Kontaktseite verbinden. Mit anderen Worten sind die ersten Kanäle und die zweiten Kanäle derart ausgeführt, dass diese im Inneren des Stützkörpers verlaufen, wobei die Löcher Verbindungen schaffen, durch die das Reaktionsgas aus den Kanälen in die GDE und aus der GDE zurück in die Kanäle strömen kann. Bei dieser Ausführungsform steht vorteilhaft ein vergleichsweise großer Flächenanteil der Kontaktseite zur Stützung der GDE durch den Stützkörper zur Verfügung.

Gemäß einer besonders vorteilhaften Ausgestaltung der Elektrolysezelle ist vorgesehen, dass in dem Gehäuse mindestens zwei Elektrolyträume angeordnet sind. Vorzugsweise können auch weit mehr als zwei Elektrolyträume vorgesehen werden, beispielsweise zehn Elektrolyträume, zwanzig Elektrolyträume oder fünfzig Elektrolyträume. Als Stapelbauweise soll eine Bauweise verstanden werden, bei der die Elektrolyträume jeweils abwechselnd mit den Elektroden (d.h. der Anode und der als Kathode ausgeführten GDE) und den Gasräumen angeordnet ist, wobei insbesondere bei großtechnischen Anwendungen genügend Elektrodenfläche auf vergleichsweise engem Bauraum zur Verfügung gestellt werden kann. Die Bauform der Elektrolysezelle in Stapelweise kann, wie im Folgenden weiter ausgeführt werden soll, unterschiedlich ausgeführt sein.

Gemäß einer Ausgestaltung der Elektrolysezelle in Stapelbauweise ist vorgesehen, dass benachbarte Elektrolyträume durch einen Stützkörper voneinander getrennt sind, der auf beiden Seiten eine Kontaktseite aufweist, an denen je eine Gasdiffusionselektrode angrenzt. Dies bedeutet, dass auf beiden Seiten des Stützkörpers eine GDE angeordnet sein muss, wobei das erste Kanalsystem und das zweite Kanalsystem in dem Stützkörper jeweils beide GDE mit dem Reaktionsgas versorgt. Die beiden benachbarten Elektrodenräume weisen auf den gegenüberliegenden Seiten der GDE dann jeweils eine vorzugsweise plattenförmig ausgebildete Anode auf, die ebenfalls beidseitig an einen Kathodenraum grenzt. In der Stapelreihenfolge befinden sich also jeweils ein Kathodenraum, ein GDE-Stützkörperverbund, ein Kathodenraum, eine Anode, ein Kathodenraum, ein GDE-Stützkörperverbund usw. Der Vorteil dieser Ausführung ist, dass die Stützkörper symmetrisch mit dem Druck des Reaktionsgases beaufschlagt werden und die Anzahl der verwendeten Stützkörper verringert werden kann.

Gemäß einer anderen Ausführung der Erfindung ist vorgesehen, dass benachbarte Elektrolyträume durch einen Stützkörper voneinander getrennt sind, an dessen Kontaktseite die Gasdiffusionselektrode des einen der benachbarten Elektrodenräume angrenzt und dessen gegenüber liegende Seite als Anode des anderen der benachbarten Elektrodenräume ausgebildet ist. Auf diese Weise entsteht eine bipolare Platte, die einseitig mit ihrer Oberfläche als Anode für einen Elektrolytraum dient und auf der anderen Seite mit dem Kanalsystem und der GDE für einen benachbarten Elektrolytraum ausgestattet ist. Bei dieser Stapelbauweise wechseln sich die Elektrolyträume jeweils mit der Kathoden-Anoden-Einheit (aufweisend den Stützkörper mit dem Gasraum und die GDE) ab, wodurch vorteilhaft einen besonders einfacher Aufbau entsteht. Insbesondere wird die elektrische Kontaktierung vereinfacht, da die bipolaren Platten elektrisch in Reihe geschaltet werden können, weswegen ein elektrischer Anschluss an eine Spannungsquelle nur jeweils an der äußersten Anode und der äußersten durch eine Stützplatte und eine GDE gebildeten Kathode erfolgen muss. Zu diesem Zweck müssen die Stützkörper elektrisch leitfähig ausgebildet sein.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: eine Elektrolysezelle in einem Aufbau gemäß dem Stand der Technik,
- Figur 2: einen Verbund aus Stützkörper und GDE, wie er in einem Ausführungsbeispiel gemäß dem Stand der Technik verwendet werden kann,
- Figur 3 und 4: Ausführungsbeispiele der erfindungsgemäßen Elektrolysezelle im Schnitt, wobei gemäß Figur 3 ein Ausführungsbeispiel des erfindungsgemäßen Verfahrens abläuft und
- Figur 5 und 6: Ausführungsbeispiele für Stützkörper im Schnitt mit unterschiedlichen Verläufen der ersten Kanäle und zweiten Kanäle, die in der erfindungsgemäßen Elektrolysezelle einsetzbar sind.

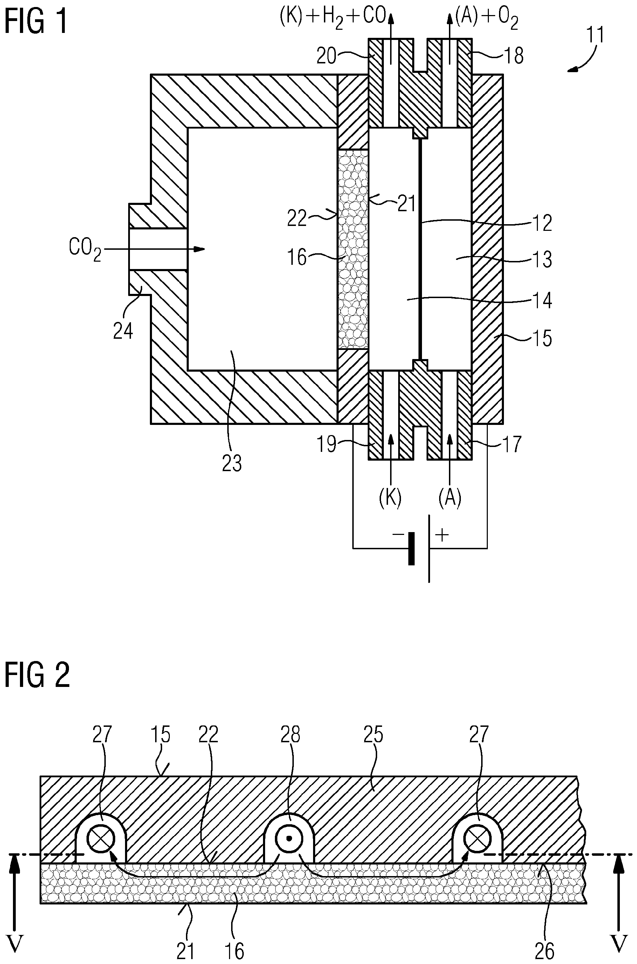

Gemäß Figur 1 ist eine Elektrolysezelle nach dem Stand der Technik dargestellt. In einem Gehäuse 11 ist ein Elektrolytraum vorgesehen, der durch eine gasundurchlässige Trennwand 12 in einen Anodenraum 13 und einen Kathodenraum 14 unterteilt ist. Der Elektrolytraum wird also gemeinsam durch den Anodenraum 13 und dem Kathodenraum 14 gebildet. Der Anodenraum 13 wird außerdem durch eine Anode 15 begrenzt und der Kathodenraum 14 durch eine als Kathode geschaltete Gasdiffusionselektrode (GDE) 16. Um durch den Anodenraum einen Anolyten (A) durchleiten zu können, ist ein Anolyteingang 17 und ein Anolytausgang 18 vorgesehen. Genauso weist der Katholytraum 14 einen Katholyteingang 19 und einen Katholytausgang 20 auf, um eine Durchleitung eines Katholyten (K) zu ermöglichen.

Die GDE 16 grenzt mit einer Elektrolytseite 21 an den Katholytraum 14 an. Mit einer der Elektrolytseite 21 gegenüber liegenden Gasseite 22 grenzt die GDE 16 an einen Gasraum 23 an, der ebenfalls in dem Gehäuse 11 untergebracht ist. Dieser Gasraum 23 weist einen Gaseinlass 24 für ein Reaktionsgas, welches aufgrund der Porosität der GDE 16 (angedeutet in Figur 1) in diese eindiffundieren kann.

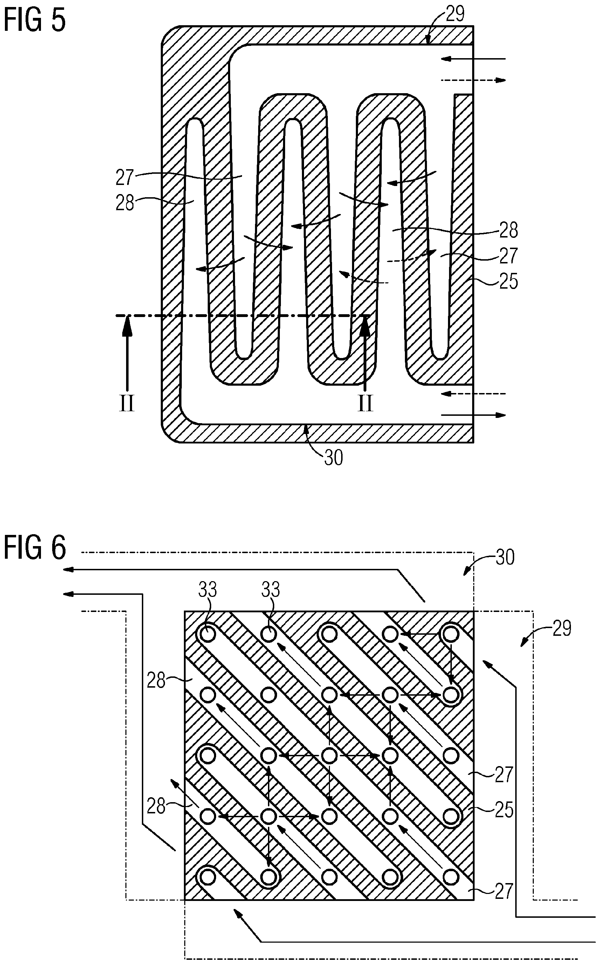

In Figur 2 ist die GDE 16 in ihrer erfindungsgemäßen Anordnung an einem Stützkörper 25 zu erkennen. Dieser Stützkörper ist im Schnitt II-II gemäß Figur 5 dargestellt, wobei Figur 5 im Schnitt V-V (eingezeichnet in Figur 2) dargestellt ist. Der Stützkörper 25 weist eine Kontaktseite 26 auf, auf der die GDE 16 mit ihrer Gasseite 22 anliegt. In der Kontaktseite 26 sind außerdem erste Kanäle 27 und zweite Kanäle 28 vorgesehen. Die ersten Kanäle 27 und zweiten Kanäle 28 unterscheiden sich darin, dass die ersten Kanäle zu einem ersten Kanalsystem 29 und die zweiten Kanäle zu einem zweiten Kanalsystem 30 gehören (vergleiche Figur 5), wobei das erste Kanalsystem fluidisch von dem zweiten Kanalsystem getrennt verläuft. Damit wird der Gasraum in zwei voneinander getrennte Volumina unterteilt.

Wie Figur 5 zu entnehmen ist, kann das erste Kanalsystem entsprechend der angedeuteten mit durchgezogen Linien dargestellten Pfeile zur Zuführung des Reaktionsgases genutzt werden und das zweite Kanalsystem 30 zur Abführung von während der Reaktion nicht verbrauchtem Reaktionsgas. Während der Reaktion wechselt das Reaktionsgas beim Durchlauf durch die Poren in der GDE 16 von dem ersten Kanalsystem in das zweite Kanalsystem, was ebenfalls durch die Pfeile angedeutet ist. Diese Pfeile deuten also einen Durchgang durch die GDE 16 an, wobei die GDE in Figur 5 nicht dargestellt ist. Beim Durchlauf durch die GDE 16 wird das Reaktionsgas zumindest teilweise im Rahmen einer Reaktion umgesetzt (vergleiche auch die Pfeile in Figur 2). Die gestrichelten Pfeile in Figur 5 deuten an, dass die Flussrichtung in dem Stützkörper auch umgekehrt werden kann, wodurch auch die GDE 16 in umgekehrter Richtung durchflossen wird.

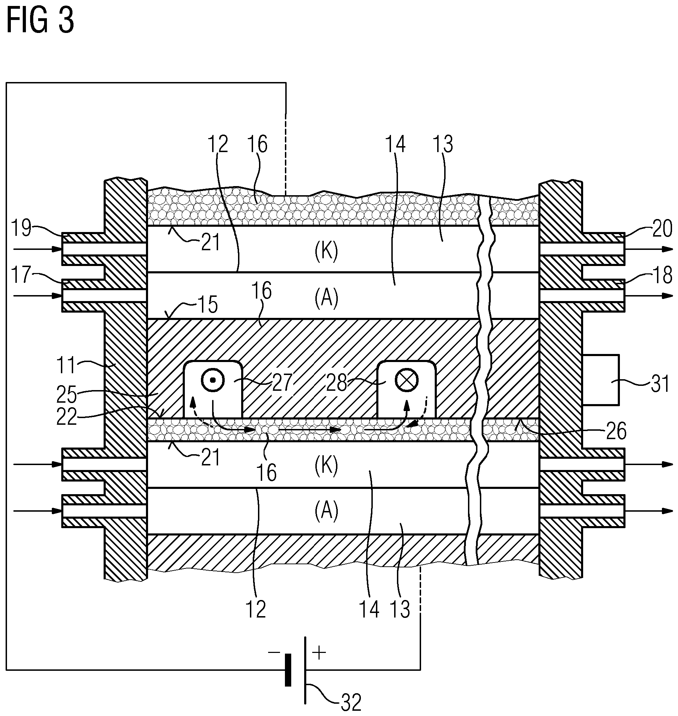

Die Einheit gemäß Figur 2 bildet eine Elektrodenplatte, welche zum Einbau in das Gehäuse einer Elektrolysezelle dienen kann. Ein solches Einbaubeispiel lässt sich der Figur 3 entnehmen. Dabei bildet die Elektrodenplatte gemäß Figur 2 eine bipolare Platte aus, d.h. dass die der Kontaktseite 26 gegenüber liegende Seite des Stützkörpers 25 als Anode 15 ausgeführt ist. Wird die Elektrodenplatte gemäß Figur 2 in eine Elektrolysezelle in Stapelbauweise eingebaut, werden die Anode 15 und die durch die GDE 16 gebildete Kathode jeweils in benachbarten Elektrolyträumen eingesetzt (vergleiche auch Figur 3).

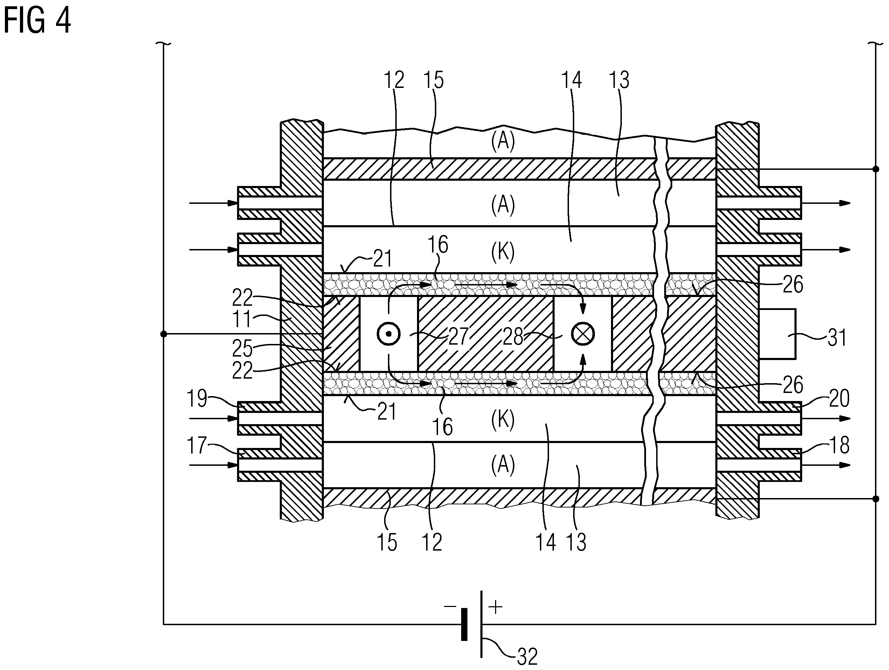

Für die erfindungsgemäße Elektrolyszelle sind grundsätzlich unterschiedliche Aufbauprinzipien möglich, welche exemplarisch in Figur 3 und in Figur 4 dargestellt sind. Beide Anordnungen zeigen möglicher Stapelbauweisen der Elektrolysezelle.

Gemäß Figur 3 kommen Elektrodenplatten mit einem Aufbau gemäß Figur 2 zum Einsatz. In der Elektrolysezelle wird die folgende Stapelreihenfolge verwirklicht. Dem Stützkörper 25 folgt auf der Seite, die als Anode 15 zum Einsatz kommt ein Anodenraum 13, der mit einer Trennwand 12 von einem nachfolgendem Kathodenraum 14 abgetrennt ist. An den Kathodenraum 14 grenzt eine GDE 16, die durch einen nachfolgenden Stützkörper 25 gestützt wird. In den Stützkörperns 25 sind auch erste Kanäle 27 und zweite Kanäle 28 ausgebildet. Danach wiederholt sich die Stapelfolge.

Für die Anodenräume 13 sind jeweils Anolyteingänge 17 und Anolytausgänge 18 sowie die für die Kathodenräume Katholyteingänge 19 und Katholytausgänge 20 vorgesehen. Außerdem ist ein Anschlussstutzen 31 zu erkennen, der in nicht näher dargestellter Weise mit den ersten Kanälen 27 verbunden ist. In der in Figur 3 dargestellten Flussrichtung wird der Anschlussstutzen als Gaseinlas verwendet, bei der durch gestrichelte Pfeile dargestellten umgekehrten Flussrichtung als Gasauslass für das Reaktionsgas, mit dem die GDE beaufschlagt wird. Ein vergleichbarer Anschlussstutzen für die zweiten Kanäle 28 befindet sich vor der in Figur 3 dargestellten Zeichenebene und ist daher nicht dargestellt.

Weiterhin ist in Figur 3 die elektrische Kontaktierung der Elektrolysezelle angedeutet. Durch die Ausführung des Verbundes aus Stutzkörper 25 und GDE 16 jeweils als bipolare Platte ist eine Reihenschaltung der Elektrolysezellen, bestehend aus den jeweiligen Anodenräumen 13 und den Kathodenräumen 14, möglich. Nur jeweils die äußerste Anode des Stapels wird an den Pluspol einer Spannungsquelle und die äußerste GDE über den äußersten Stützkörper an den Minuspol der Spannungsquelle 32 angeschlossen.

Gemäß Figur 4 ist ein ähnlicher Aufbau wie in Figur 3 beschrieben, wobei im Folgenden nur die Unterschiede erläutert werden sollen. Der Stützkörper 25 weist zwei gegenüberliegende Kontaktseiten 26 auf, an denen je eine GDE 16 angeordnet ist. Daraus ergibt sich folgende Stapelreihenfolge für die Stapelbauweise. Es wird eine Elektrodenplatte als Anode 15 vorgesehen, an die ein Anolytraum 13 angrenzt. Dieser ist durch eine Trennwand 12 von einem Katholytraum 14 getrennt. Diesem folgt eine GDE 16, die auf einem Stützkörper 25 angebracht ist. Auf der anderen Seite des Stützkörpers 25 befindet sich eine weitere GDE 16. Dieser folgt ein weiterer Kathodenraum 14, eine weitere Trennwand 12 und ein weiterer Anodenraum 13. Anschließend beginnt die Stapelfolge wieder mit einer weiteren Anode 15.

Bei dieser Anordnung der aus Anodenraum 13 und Kathodenraum 14 bestehenden Elektrolysezellen sind diese parallel geschaltet. Daher ist jeweils eine elektrische Verbindung aller Anoden 15 und alle GDE 16 jeweils über die Stützkörper 25 erforderlich. Dies ist in Figur 4 angedeutet. Wie zu erkennen ist, ist der Pluspol der Spannungsquelle 32 mit den Anoden 15 und der Minuspol der Spannungsquelle 32 mit den elektrisch leitenden Stützkörpern 25 elektrisch verbunden.

Die ersten Kanäle 27 und zweiten Kanäle 28 sind bei dem Stützkörper 25 gemäß Figur 4 derart ausgebildet, dass diese sich zu beiden Seiten des Stützkörpers öffnen. Die ersten Kanäle 27 und zweiten Kanäle 28 versorgen somit gleichzeitig beide gegenüberliegenden GDE 16 mit dem Reaktionsgas. Die fluidischen Anschlüsse (17, 18, 19, 20, 31) der Elektrolysezelle weisen keine Unterschiede zum Aufbau gemäß Figur 3 auf und werden in Zusammenhang mit Figur 4 daher nicht näher erläutert.

Ein möglicher Verlauf des ersten Kanalsystems 29 und des zweiten Kanalsystems 30 lässt sich Figur 5 entnehmen. Beide Kanalsysteme weisen einen kammartigen Verlauf auf, was bedeutet, dass die ersten Kanäle 27 und die zweiten Kanäle 28 die Zinken dieser kammartigen Anordnung bilden. Diese verlaufen jeweils im Wechsel parallel zueinander, was dadurch erreicht wird, dass die kammartigen Strukturen ineinandergreifen. Außerdem sind die ersten Kanäle 27 und die zweiten Kanäle 28 auch parallel zur dargestellten Zeichenebene angeordnet, so dass diese auch parallel zur oberhalb der gleichen Ebene befindlichen Kontaktseite 26 (vgl. Figur 2 verlaufen).

Durch den parallelen Verlauf der ersten Kanäle 27 und zweiten Kanäle 28 entsteht, wie Figur 2 zu entnehmen ist, eine konstante Wegstrecke, die das durch die besagten Kanäle geleitete Reaktionsgas in der GDE 16 zurücklegen muss, um vom der ersten Kanalsystem 29 in das zweite Kanalsystem 30 (oder umgekehrt) zu wechseln. Hierdurch wird eine gleichmäßige Beaufschlagung der GDE mit Reaktionsgas bewirkt, wobei die Gasströmung vorranging parallel zur Gasseite 22 der GDE 16 verläuft. Ein Austritt des Reaktionsgases aus der Elektrolytseite 21 der GDE 16 kann dadurch einfacher verhindert werden.

Wie Figur 5 weiter zu entnehmen ist, weist das erste Kanalsystem 29 und das zweite Kanalsystem 30 einen Querschnittsverlauf auf, der sich in Richtung zu den toten Enden der der ersten Kanäle 27 und zweiten Kanäle 28 stetig verringert. Hierdurch kann eine gleichmäßige Druckverteilung des Reaktionsgases in dem besagten Kanalsystem sichergestellt werden, so dass das lokale Druckgefälle zwischen den Öffnungen der der ersten Kanäle 27 und zweiten Kanäle 28 über die Fläche der GDE 16 konstant gehalten werden kann.

In Figur 6 ist eine alternative Ausgestaltung des Stützkörpers 25 dargestellt, bei dem die Öffnungen in der Kontaktseite durch Löcher 33 gebildet werden. Die Löcher können beispielsweise Bohrungen sein, die die ersten Kanäle 27 und zweiten Kanäle 28 jeweils mit der gemäß Figur 6 hinter der Zeichenebene liegenden Kontaktseite des Stützkörpers 25 verbinden. Die ersten Kanäle 27 und zweiten Kanäle 28 verlaufen bei dem Ausführungsbeispiel gemäß Figur 6 diagonal in der dargestellten quadratischen Schnittfläche des Stützkörpers 25. Die Löcher 33 sind in dem Stützkörper 25 auf einem quadratischen Raster angeordnet, so dass jeweils benachbarte Löcher auch jeweils abwechselnd mit einem der der ersten Kanäle 27 oder einem der zweiten Kanäle 28 verbunden sind. Hierdurch entstehen entsprechend der in Figur 6 angedeuteten senkrecht und waagerecht verlaufenden Pfeile jeweils kurze Wege des Reaktionsgases in der hinter der Zeichenebene liegenden GDE, und zwar jeweils von einem der Löcher 33 zu den vier senkrecht und waagerecht benachbart liegenden Löchern 33.

Um die der ersten Kanäle 27 und die zweiten Kanäle 28 jeweils zu einem ersten Kanalsystem 29 und einem zweiten Kanalsystem 30 zu verbinden, werden die besagten Kanalsysteme in dem nicht näher dargestellten, den Stützkörper umgebenden Gehäuse fortgeführt und zusammengefasst. Der Verlauf des ersten Kanalsystems 29 und des zweiten Kanalsystems 30 ist am Rand des Stützkörpers mit Strichpunktlinien angedeutet.

Ein Beispiel für die Anwendung der Elektrolysezelle ist am Beispiel von Figur 1 dargestellt und kann genauso mit den gemäß Figuren 2 - 6 gestalteten Elektrolyszellen durchgeführt werden. Als Reaktionsgas kommt Kohlendioxid zum Einsatz, welches in der GDE 16 zu Kohlenmonoxid umgesetzt wird. Das Kohlenmonoxid durchtritt die GDE bevorzugt auf der Elektrolytseite 21 und wird mit dem durchgeleiteten Katholyt (K) abtransportiert. Aufgrund einer elektrochemischen Aufspaltung von Wasser entsteht in dem Kathodenraum 14 außerdem Wasserstoff, welches zusammen mit dem Kohlenmonoxid abgeleitet wird. Im Anodenraum 13 entsteht Sauerstoff. Die Trennwand 12 verhindert, dass sich das Wasserstoffgas mit dem Sauerstoffgas mischt.

Bei den Elektolysezellen gemäß den Figuren 2 - 6 wird im Unterschied zur Vorrichtung gemäß Figur 1 das Kohlendioxid über eines der beiden Kanalsysteme (erstes Kanalsystem 29, zweites Kanalsystem 30) eingespeist und nicht umgesetztes Kohlendioxidgas durch das andere der beiden Kanalsysteme (29, 30) wieder ausgeleitet. Hierdurch entsteht die Möglichkeit, den Druckunterschied zwischen den beiden besagten Kanalsystemen einzustellen und als Steuerungsgröße für den Mengendurchsatz an Kohlendioxid in der GDE 16 zu nutzen. Das ausgeleitete Kohlendioxidgas kann auch Kohlenmonoxidgas enthalten, welches nicht zur Elektrolytseite 21 der GDE 16 durchgedrungen ist.

## Patentansprüche

1. Elektrolysezelle, aufweisend ein Gehäuse (11) mit einer Anode (15) und einer als Kathode geschalteten Gasdiffusionselektrode (16), welche beide in einem durch das Gehäuse (11) gebildeten Elektrolytraum mit einem Elektrolyt beaufschlagbar sind, wobei
• die Gasdiffusionselektrode (16) als Trennung zwischen dem Elektrolytraum und einem in dem Gehäuse (11) vorgesehenen Gasraum für ein Reaktionsgas angeordnet ist und
• die Gasdiffusionslelektrode mit einer Elektrolytseite (21) an den Elektrolytraum und mit einer Gasseite (22) an den Gasraum grenzt,
**dadurch gekennzeichnet,**
**dass** die Gasdiffusionselektrode (16) mit der Gasseite (22) an eine Kontaktseite (26) eines Stützkörpers (25) grenzt, wobei der Gasraum durch ein erstes Kanalsystem (29) und durch ein zweites Kanalsystem (30) ausgebildet ist, wobei
• das erste Kanalsystem (29) und das zweite Kanalsystem (30) getrennt voneinander verlaufen und damit zwei getrennte Volumina des Gasraumes bilden und
• das erste Kanalsystem (29) und das zweite Kanalsystem (30) jeweils Öffnungen in der Kontaktseite (26) aufweisen.

2. Elektrolysezelle nach Anspruch 1,
**dadurch gekennzeichnet,**
**dass** der Elektrolytraum durch eine als ionendurchlässige Trennmembran oder als ionen- und flüssigkeitsdurchlässiger Separator ausgeführte Trennwand (12) in einen Anodenraum (13) und einen Kathodenraum (14) geteilt ist, wobei der Anodenraum (13) einen Anlolyteingang (17) und einen Anolytausgang (18) für einen Anolyten und der Kathodenraum einen Katolyteingang (19) und einen Katholytausgang (20) für einen Katholyten aufweist.

3. Elektrolysezelle nach einem der voranstehenden Ansprüche,
**dadurch gekennzeichnet,**
**dass** das erste Kanalsystem (29) erste Kanäle (27) und das zweite Kanalsystem (30) zweite Kanäle (28) aufweist, wobei die ersten Kanäle (27) und die zweiten Kanäle (28) abwechselnd und parallel zueinander und zur Kontaktseite (26) verlaufend in dem Stützkörper (25) angeordnet sind.

4. Elektrolysezelle nach Anspruch 3,
**dadurch gekennzeichnet,**
**dass** das erste Kanalsystem (29) und das zweite Kanalsystem (30) kammartig ausgebildet sind und ineinandergreifen.

5. Elektrolysezelle nach einem der Ansprüche 3 oder 4,
**dadurch gekennzeichnet,**
**dass** die Öffnungen in der Kontaktseite (26) durch die zur Kontaktseite (26) hin offenen ersten Kanäle (25) und die zur Kontaktseite (26) hin offenen zweiten Kanäle (28) ausgebildet sind.

6. Elektrolysezelle nach einem der Ansprüche 3 oder 4,
**dadurch gekennzeichnet,**
**dass** die Öffnungen in der Kontaktseite (26) durch Löcher (33) ausgebildet sind, die das erste Kanalsystem (29) und das zweite Kanalsystem (30) jeweils mit der Kontaktseite (26) verbinden.

7. Elektrolysezelle nach einem der voranstehenden Ansprüche,
**dadurch gekennzeichnet,**
**dass** in dem Gehäuse (11) mindestens zwei Elektrolyträume angeordnet sind.

8. Elektrolysezelle nach Anspruch 7
**dadurch gekennzeichnet,**
**dass** benachbarte Elektrolyträume durch einen Stützkörper (25) voneinander getrennt sind, der auf beiden Seiten eine Kontaktseite (26) aufweist, an denen je eine Gasdiffusionselektrode (16) angrenzt.

9. Elektrolysezelle nach Anspruch 7
**dadurch gekennzeichnet,**
**dass** benachbarte Elektrolyträume durch einen Stützkörper (25) voneinander getrennt sind, an dessen Kontaktseite (26) die Gasdiffusionselektrode (16) des einen der benachbarten Elektrodenräume angrenzt und dessen gegenüberliegende Seite als Anode (15) des anderen der benachbarten Elektrodenräume ausgebildet ist.

10. Elektrolysezelle nach einem der voranstehenden Ansprüche,
**dadurch gekennzeichnet,**
**dass** der Stützkörper (25) aus einem elektrisch leitenden Material besteht.

11. Verfahren zum Betrieb einer Elektrolysezelle nach einem der vorangehenden Ansprüche, wobei die Elektrolytseite (21) der Gasdiffusionselektrode (16) mit einem Elektrolyt beaufschlagt wird und die Gasseite (22) der Gasdiffusionselektrode (16) mit einem Reaktionsgas beaufschlagt wird,
**dadurch gekennzeichnet,**
**dass** die Flussrichtung des Reaktionsgases im ersten Kanalsystem (29), an der Gasseite (22) und im zweiten Kanalsystem (30) während der Elektrolyse mindestens einmal umgekehrt wird.

## Claims

1. Electrolysis cell comprising a housing (11) with an anode (15) and a gas diffusion electrode (16) connected as cathode, which can both be brought into contact with an electrolyte in an electrolyte space formed by the housing (11), where
• the gas diffusion electrode (16) is arranged as separator between the electrolyte space and a gas space for a reaction gas provided in the housing (11) and
• the gas diffusion electrode adjoins on an electrolyte side (21) the electrolyte space and on a gas side (22) adjoins the gas space,
**characterized in that**
the gas diffusion electrode (16) adjoins on the gas side (22) a contact side (26) of a support body (25), where the gas space is formed by a first channel system (29) and by a second channel system (30), where
• the first channel system (29) and the second channel system (30) run separately from one another and thus form two separate volumes of the gas space and
• the first channel system (29) and the second channel system (30) each have openings in the contact side (26).

2. Electrolysis cell according to Claim 1,
**characterized in that**
the electrolyte space is divided by a dividing wall (12) configured as ion-permeable separation membrane or as ion- and liquid-permeable separator into an anode space (13) and a cathode space (14), where the anode space (13) has an anolyte inlet (17) and an anolyte outlet (18) for an anolyte and the cathode space has a catholyte inlet (19) and a catholyte outlet (20) for a catholyte.

3. Electrolysis cell according to either of the preceding claims,
**characterized in that**
the first channel system (29) has first channels (27) and the second channel system (30) has second channels (28), with the first channels (27) and the second channels (28) being arranged alternately and parallel to one another and running to the contact side (26) in the support body (25).

4. Electrolysis cell according to Claim 3,
**characterized in that**
the first channel system (29) and the second channel system (30) have a comb-like configuration and intermesh.

5. Electrolysis cell according to either Claim 3 or 4,
**characterized in that**
the openings in the contact side (26) are formed by the first channels (25) which are open in the direction of the contact side (26) and the second channels (28) which are open in the direction of the contact side (26).

6. Electrolysis cell according to either Claim 3 or 4,
**characterized in that**
the openings in the contact side (26) are formed by holes (33) which connect the first channel system (29) and the second channel system (30) in each case to the contact side (26) .

7. Electrolysis cell according to any of the preceding claims,
**characterized in that**
at least two electrolyte spaces are arranged in the housing (11) .

8. Electrolysis cell according to Claim 7,
**characterized in that**
adjacent electrolyte spaces are separated from one another by a support body (25) which on both sides has a contact side (26) which is in each case adjoined by a gas diffusion electrode (16).

9. Electrolysis cell according to Claim 7,
**characterized in that**
adjacent electrolyte spaces are separated from one another by a support body (25) which on its contact side (26) is adjoined by the gas diffusion electrode (16) of one of the adjacent electrode spaces and the opposite side of which is configured as anode (15) of the other of the adjacent electrode spaces.

10. Electrolysis cell according to any of the preceding claims,
**characterized in that**
the support body (25) consists of an electrically conductive material.

11. Method for operating an electrolysis cell according to any of the preceding claims, where the electrolyte side (21) of the gas diffusion electrode (16) is brought into contact with an electrolyte and the gas side (22) of the gas diffusion electrode (16) is brought into contact with a reaction gas,
**characterized in that**
the flow direction of the reaction gas in the first channel system (29), on the gas side (22) and in the second channel system (30) is reversed at least once during the electrolysis.

## Revendications

1. Cellule d'électrolyse, comportant une enveloppe (11) ayant une anode (15) et une électrode (16) à diffusion gazeuse montée en cathode, qui toutes deux peuvent être alimentées en un électrolyte dans un espace pour de l'électrolyte formé par l'enveloppe (11), dans laquelle
• l'électrode (16) à diffusion gazeuse est montée en séparation entre l'espace pour de l'électrolyte et un espace pour du gaz prévu dans l'enveloppe (11) pour un gaz de réaction, et
• l'électrode à diffusion gazeuse est voisine de l'espace pour de l'électrolyte par un côté (21) d'électrolyte, et de l'espace pour du gaz par un côté (22) de gaz,
**caractérisée en ce que**
l'électrode (16) à diffusion gazeuse est voisine, par le côté (22) du gaz d'un côté (26) de contact d'un corps (25) d'appui, dans laquelle l'espace pour du gaz est constitué par un premier système (29) de conduits et par un deuxième système (30) de conduits, dans laquelle
• le premier système (29) de conduits et le deuxième système (30) de conduits s'étendent en étant séparés l'un de l'autre et forment ainsi deux volumes distincts de l'espace pour du gaz, et
• le premier système (29) de conduits et le deuxième système (30) de conduits ont chacun des ouvertures dans le côté (26) de contact.

2. Cellule d'électrolyse suivant la revendication 1, **caractérisée**
**en ce que** l'espace d'électrolyte est subdivisé en un espace (13) anodique et en un espace (14) cathodique par une cloison (12), réalisée sous la forme d'une membrane de séparation perméable aux ions ou d'un séparateur perméable aux ions et aux liquides, dans laquelle l'espace (13) anodique a une entrée (17) d'anolyte et une sortie (18) d'anolyte pour un anolyte, et l'espace cathodique a une entrée (19) de catholyte et une sortie (20) de catholyte pour un catholyte.

3. Cellule d'électrolyse suivant l'une des revendications précédentes,
**caractérisée**
**en ce que** le système (29) de conduits a des premiers conduits (27) et le deuxième système (30) de conduits a des deuxièmes conduits (28), dans laquelle les premiers conduits (27) et les deuxièmes conduits (28) sont disposés dans le corps (25) d'appui, en s'étendant en alternance et parallèlement les uns aux autres et vers le côté (26) de contact.

4. Cellule d'électrolyse suivant la revendication 3,
**caractérisée**
**en ce que** le premier système (29) de conduits et le deuxième système (30) de conduits sont constitués à la manière d'un peigne et s'interpénètrent.

5. Cellule d'électrolyse suivant l'une des revendications 3 ou 4,
**caractérisée**
**en ce que** les ouvertures dans le côté (26) de contact sont constituées par les premiers conduits (25) ouverts vers le côté (26) de contact et par les deuxièmes conduits (28) ouverts vers le côté (26) de contact.

6. Cellule d'électrolyse suivant l'une des revendications 3 ou 4,
**caractérisée**
**en ce que** les ouvertures dans le côté (26) de contact sont constituées par des trous (33), qui mettent le premier système (29) de conduits et le deuxième système (30) de conduits respectivement en communication avec le côté (26) de contact.

7. Cellule d'électrolyse suivant l'une des revendications précédentes,
**caractérisée**
**en ce qu'**au moins deux espaces pour de l'électrolyte sont disposés dans l'enveloppe (11).

8. Cellule d'électrolyse suivant la revendication 7,
**caractérisée**
**en ce que** des espaces voisins pour de l'électrolyte sont séparés l'un de l'autre par un corps (25) d'appui, qui a, des deux côtés, un côté (26), dont est voisin respectivement une électrode (16) à diffusion gazeuse.

9. Cellule d'électrolyse suivant la revendication 7,
**caractérisée**
**en ce que** les espaces voisins pour de l'électrolyte sont séparés l'un de l'autre par un corps (25) d'appui, dont le côté (26) de contact est voisin de l'électrode (16) à diffusion gazeuse de l'un des espaces voisins d'électrode, et dont le côté opposé est constitué en anode (15) de l'autre des espaces voisins d'électrode.

10. Cellule d'électrolyse suivant l'une des revendications précédentes,
**caractérisée**
**en ce que** le corps (25) d'appui est en un matériau conducteur de l'électricité.

11. Procédé pour faire fonctionner une cellule d'électrolyse suivant l'une des revendications précédentes, dans lequel le côté (21) d'électrolyte de l'électrode (16) à diffusion gazeuse est alimentée en un électrolyte, et le côté (22) du gaz de l'électrode (16) à diffusion gazeuse est alimenté en un gaz de réaction,
**caractérisé**
**en ce que** le sens d'écoulement du gaz de réaction dans le premier système (29) de conduits du côté (22) gaz et dans le deuxième système (30) de conduits est inversé au moins une fois pendant l'électrolyse.
